# EUROPEAN PATENT APPLICATION

(11) **EP 1 728 725 A1**
(43) Date of publication of application: **06.12.2006**
(21) Application number: 05721531.1
(22) Date of filing: 18.03.2005
(51) Int. Cl.: B65D 5/38, B65D 5/462, B65D 5/66, B65D 77/04, B65D 85/00, B65D 85/57

(54) **STORAGE CASE**

(30) Priority: 22.03.2004 JP 2004082430
(71) Applicant: SONY CORPORATION, Tokyo 141-0001 (JP); Nippon Paper-Pak Co. Ltd., Tokyo 162-0826 (JP)
(72) Inventor: KURATA, Ryuichi C/O SONY CORPORATION, Shinagawa-ku, Tokyo 1410001 (JP); MASATOKI, Tamiharu C/O SONY CORPORATION, Shinagawa-ku, Tokyo 1410001 (JP); MITSUI, Noriaki C/O NIPPON PAPER-PAK CO., LTD., Shinjuku-ku, Tokyo 1620826 (JP); HIGASHI, Nobuhiko C/O NIPPON PAPER-PAK CO., LTD., Shinjuku-ku, Tokyo 1620826 (JP)
(74) Representative: Müller, Frithjof E.
(86) International application number: PCT/JP2005/005604
(87) International publication number: WO 2005/090173

(57) **Abstract**

An enclosing casing which enables enclosing media to be seen at a glance among a plurality of enclosing media held in enclosing medium holders of an inner casing is provided. An enclosing casing 1 is constructed by a combination of an outer casing 3 which has an inserting port 4 in one side portion and is formed by folding a paper material and an inner casing 2 which is inserted and ejected into/from the outer casing 3 through the inserting port 4 and is formed by folding the paper material. The inner casing 2 is constructed by enclosing medium holders 2a, 2b, and 2c of a plurality of stages which overlap so as to be relatively movable. All of the enclosing medium holders 2a, 2b, and 2c of the plurality of stages are reciprocatively moved in almost the same direction when they are inserted and ejected into/from the outer casing 3.

## Description

### Technical Field

The invention relates to an enclosing casing constructed by a combination of an outer casing and an inner casing which is inserted and ejected into/from the outer casing. More particularly, the invention relates to an enclosing casing in which an inner casing is constructed by enclosing medium holders of a plurality of stages which overlap each other so as to be relatively movable, thereby enabling an enclosing medium held in each enclosing medium holder to be easily and selectively taken out.

### Background Art

Hitherto, there has been an enclosing casing formed by folding a paper material for the purpose of realizing the preservation of the environment, cost reduction, and the like. In such an enclosing casing, the casing having only one enclosing space is a main stream. For example, if a plurality of disk-shaped recording media are overlaid and enclosed, there is a risk that a recording portion or a print surface is damaged due to a mutual rub. Therefore, for example, in an enclosing casing disclosed in Patent Document 1 (JP-A-2003-81252), an enclosing space is divided into a plurality of sections by partition plates and since the partition plates exist among enclosing media enclosed in the sections, the enclosing media are not come into contact with each other. However, in Patent Document 1 mentioned above, since there is used a structure in which all of the enclosing media are inserted and ejected into/from an outer casing in the mutually overlapped state, even if an inner casing is merely pulled out of the outer casing, each enclosing medium cannot be confirmed in a lump. Therefore, the user cannot recognize a desired one of a plurality of enclosing media at a glance. It is difficult to take out the enclosing medium overlaid under the partition plate. The invention is made in consideration of the above problem and intends to provide an enclosing casing in which usability of the user is improved while avoiding a mutual contact of a plurality of enclosing media.

### Disclosure of Invention

To solve the above problem, an enclosing casing of the invention is constructed by a combination of an outer casing having an inserting port in one side portion and an inner casing which is inserted and ejected into/from the outer casing through the inserting port, wherein the inner casing is constructed by enclosing medium holders of a plurality of stages which overlap each other so as to be relatively movable. Any one of the enclosing medium holders of the plurality of stages can be enclosed in the outer casing. It is sufficient that the outer casing has such a shape that the enclosing medium holders of the plurality of stages can be collectively enclosed and carried. Although it may have, for example, a shape like a tray, such a shape as to wrap the whole enclosing medium holder is preferable from a viewpoint of protecting the enclosing medium held in the enclosing medium holder against the dust, sunlight, and the like. For example, it is preferable to use a box-shape having such an internal volume that all of the enclosing medium holders hold the enclosing media and can be enclosed in the outer casing so as to overlap each other. The enclosing medium is held in the enclosing medium holder, inserted and ejected into/from the outer casing together with the enclosing medium holder, and relatively moved to the other enclosing medium holders. In order to prevent the enclosing medium from falling from the enclosing medium holder at the time of the insertion/ejection or the relative movement, it is desirable that a restricting portion which can maintain the stable holding of the enclosing medium while restricting a positional deviation of the enclosing medium is provided for the enclosing medium holder. If the positional deviation of the enclosing medium in the enclosing medium holder can be restricted, a rub of the enclosing medium to the enclosing medium holder can be also prevented. The enclosing medium holders of the plurality of stages overlap each other so as to be relatively movable. That is, it is possible to freely develop so as to mutually overlap the enclosing medium holders or reduce the overlap portion. If the enclosing medium holders are pulled out of the outer casing and developed, an overlap area of the enclosing media can be decreased. Thus, the user can see the enclosing media in a lump and recognize a desired one of the plurality of enclosing media at a glance. The enclosing medium locating at a lower stage can be easily taken out since the enclosing medium holder locating at an upper stage and the enclosing medium held therein do not become obstacles. By mutually allowing the enclosing medium holders to overlap each other, plane dimensions can be reduced as compared with those in the developed state. If the enclosing medium holders are enclosed in the outer casing in this state, the plane dimensions of the whole enclosing casing can be decreased. Thus, a storing space can be decreased and when the enclosing casing is carried, it can be easily handled because it has a compact size. Hitherto, the operation in the enclosing casing constructed by the combination of the outer casing and the inner casing is only such an operation that one inner casing is inserted and ejected into/from the outer casing. On the other hand, the invention has such unpredictability and interest that the enclosing medium holders of the plurality of stages constructing the inner casing are relatively moved and causes the user to be interested in it. Each of the outer casing and the inner casing is formed by folding a paper material. It is an essence that the paper material is paper as a main material. The paper material is not limited to a material which is manufactured from vegetable fiber or other fiber. Naturally, it is possible to use a paper material which is manufactured by mixing one or more kinds of a mechanical pulp and a chemical pulp which are manufactured from a conifer or a broad-leaved tree and an wastepaper pulp which is obtained by recycling newspaper, wastepaper, and the like. Synthetic paper manufactured by using a synthetic high molecular substance may be used. It is also possible to use any one of a corrugated cardboard, a material in which one or both of the surfaces are made of nonwoven fabrics, a material in which one or both of the surfaces are coated with an electrostatic inhibitor, and a material in which a thermoplastic resin layer has been laminated onto one or both of the surfaces. When the enclosing medium holders of a plurality of stages are inserted and ejected into/from the outer casing, if they are reciprocatively moved in almost the same direction, each enclosing medium holder can be individually inserted and ejected into/from the outer casing. Thus, there is no need to pull out all of the enclosing medium holders from the outer casing and develop them and a space necessary to pull out the enclosing medium holders from the outer casing can be reduced. At the time of the relative movement of the enclosing medium holders, if the relative movement is continued in such a direction as to decrease an overlap amount of both of the holders, they are separated and there is a fear of dropout or loss. Therefore, if retaining portions which are mutually hooked so as to restrict the relative movement in the separating direction of them are provided in the portions where the enclosing medium holders overlap each other, the separation of the enclosing medium holders can be prevented. Since the retaining portions are mutually hooked, in association with the pulling-out operation of a certain enclosing medium holder, a traction operation which can also pull out the other enclosing medium holder is also obtained. In the portions where the outer casing and the enclosing medium holder overlap, retaining portions which are hooked so as to prevent the separation of them may be also provided. If a lid portion which closes the inserting port of the outer casing in the state where all of the enclosing medium holders have been enclosed in the outer casing is provided for the enclosing medium holder or the outer casing, a fly-out of the enclosing medium from the inserting port and the entering of the dust or moisture from the inserting port can be prevented. The number of parts can be reduced and the loss of the media can be also prevented as compared with the case where the lid portion is provided as a separate member. Particularly, if the lid portion is provided for the enclosing medium holder instead of the outer casing, since the opening/closing operation of the lid portion can be performed simultaneously with the inserting/ejecting operation of the enclosing medium holder into/from the outer casing, the high usability is obtained. Further, if the lid portion is provided for the enclosing medium holder of the lowest stage and folded so as to wrap the enclosing medium holder of the upper stage side and a front edge portion of the lid portion is inserted into the inserting port, all of the enclosing medium holders can be shielded from the outside of the outer casing. When the enclosing medium holders are pulled out of the outer casing, since the lid portion is developed at the lowest stage, the other enclosing medium holders are not covered nor hidden. If enclosing medium holders of a plurality of stages are enclosed so as to overlap each other in a telescopic form in which the smaller holders are sequentially fitted into the larger holders, larger mutual contact portions of the enclosing medium holders than those of, for example, tray-shaped enclosing medium holders can be assured and a guide operation adapted to enable the relative movement in a desired direction to be certainly executed is obtained. Particularly, if a gap larger than a thickness of enclosing medium which is held in the inside enclosing medium holder is assured between the outside enclosing medium holder and the inside enclosing medium holder which is fitted therein, a pressing force does not act on the enclosing medium held in the inside enclosing medium holder from the outside enclosing medium holder, so that a damage or deformation of the enclosing medium can be prevented. At the time of the relative movement of the enclosing medium holders, the rub with the outside enclosing medium holder can be prevented and it is possible to prevent the enclosing medium from being scratched. In the case where a tab is provided for an edge portion of the enclosing medium holder which faces the inserting port in the state where the enclosing medium holder has been enclosed in the outer casing, the tab can be made to function as a knob for enabling the enclosing medium holder to be easily pulled out. Further, if the contents of the enclosing medium are displayed on the tab, the tab can be also made to function as a label for identifying the enclosing medium. According to the enclosing casing of the invention, since the inner casing is constructed by enclosing medium holders of a plurality of stages which overlap each other so as to be relatively movable, the overlapped enclosing medium holders can be shifted and the enclosing media held in the respective enclosing medium holders can be seen in a lump. Even the enclosing medium locating at the lower stage can be easily taken out since the enclosing medium holder at the upper stage and the enclosing media held therein do not become obstacles. Thus, the usability of the user can be improved.

### Brief Description of Drawings

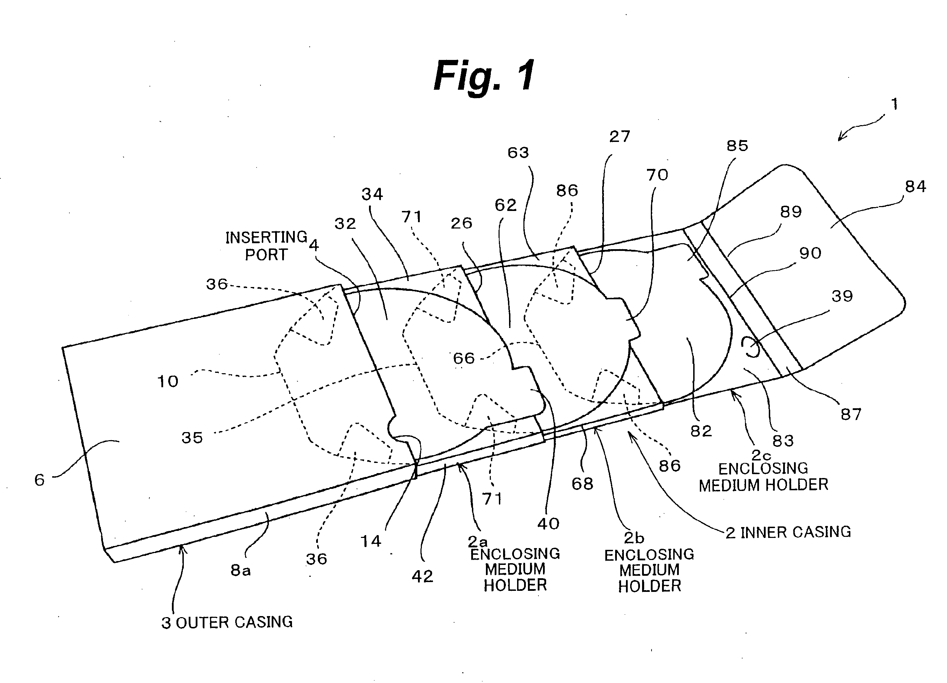

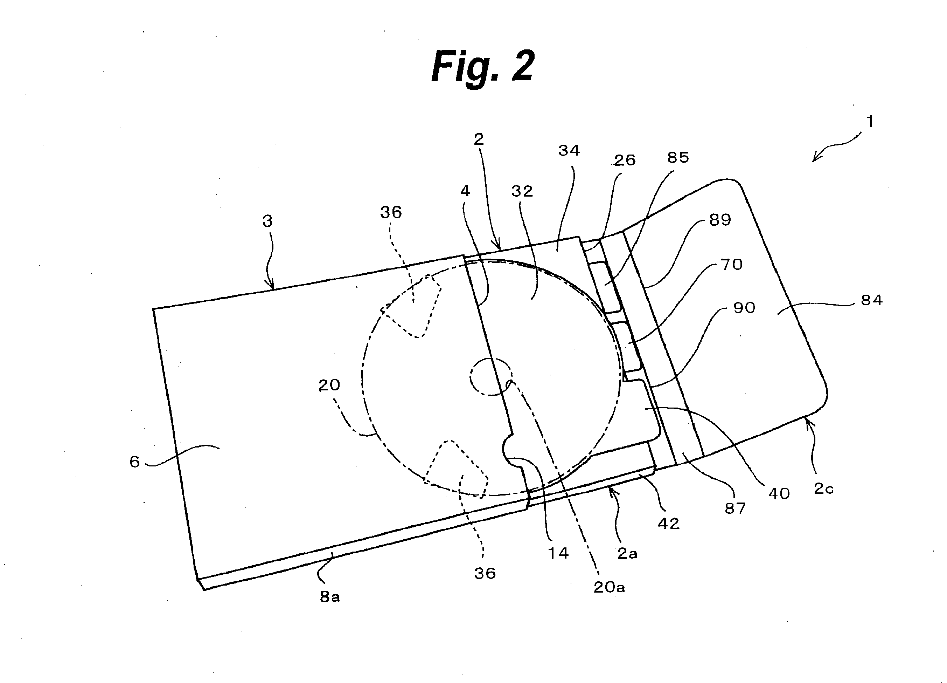

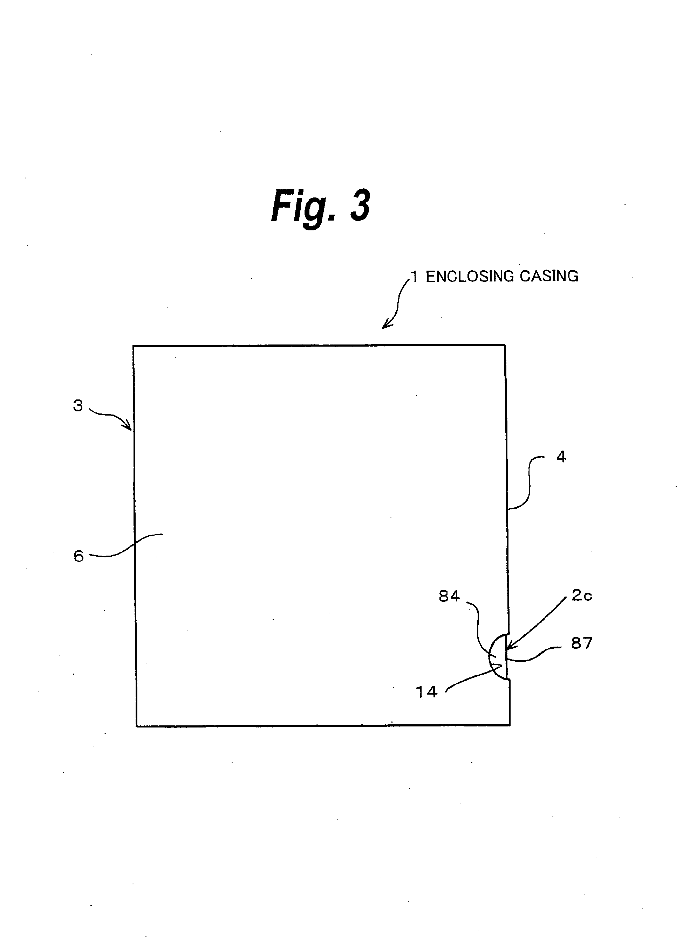

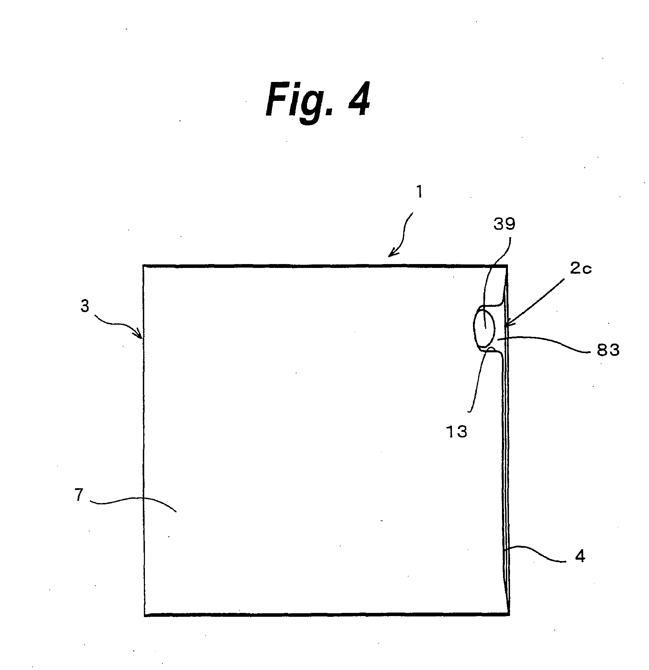

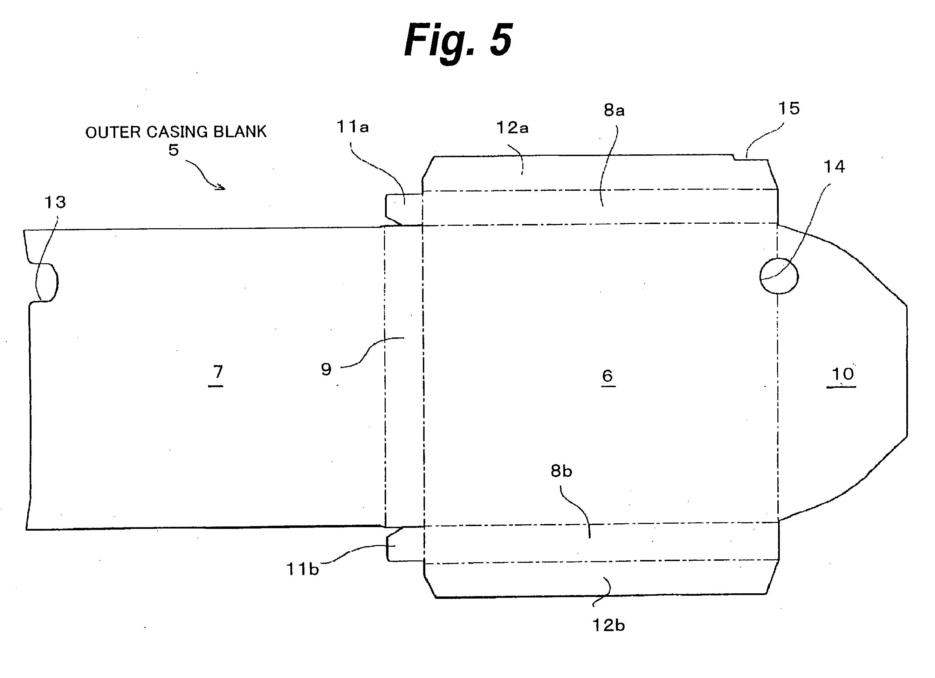

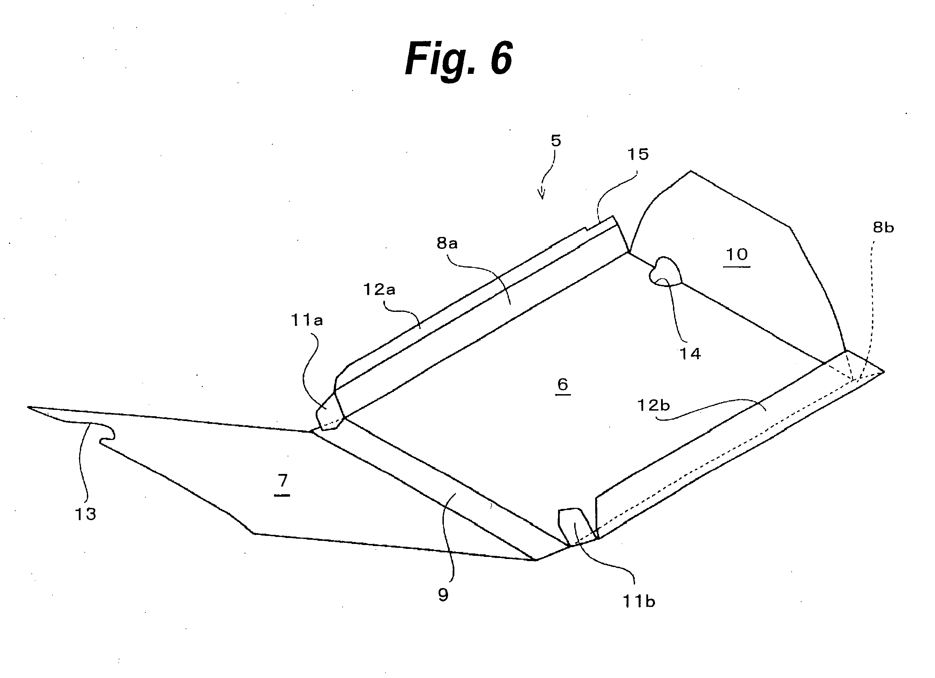

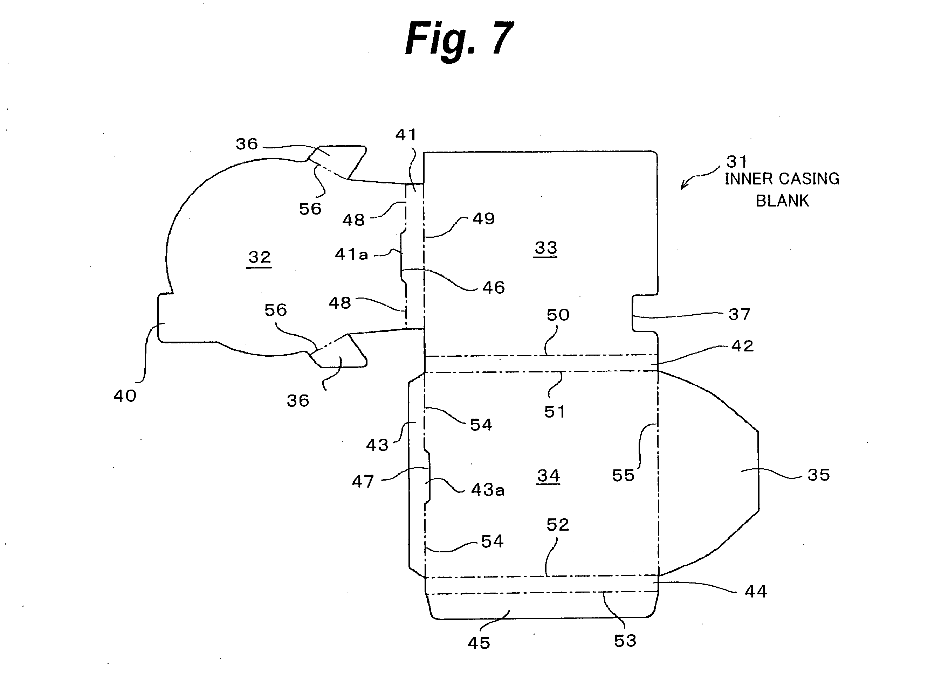

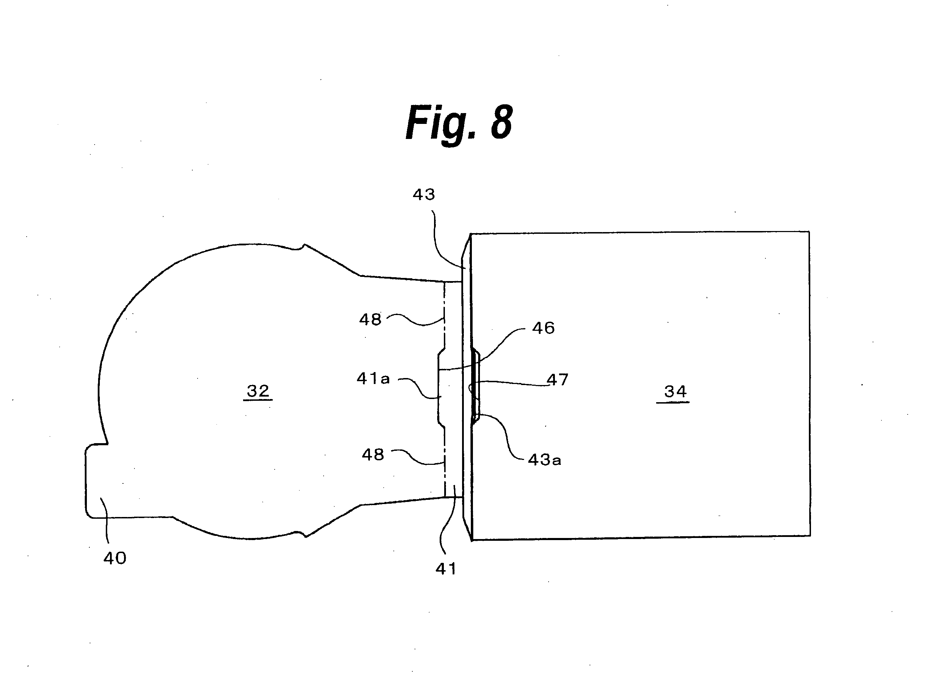

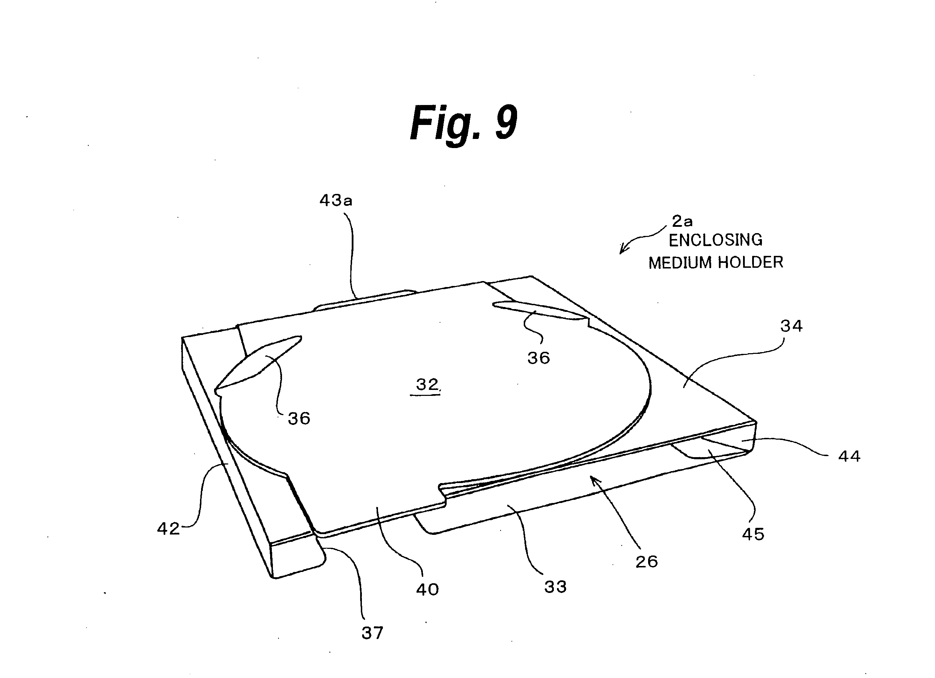

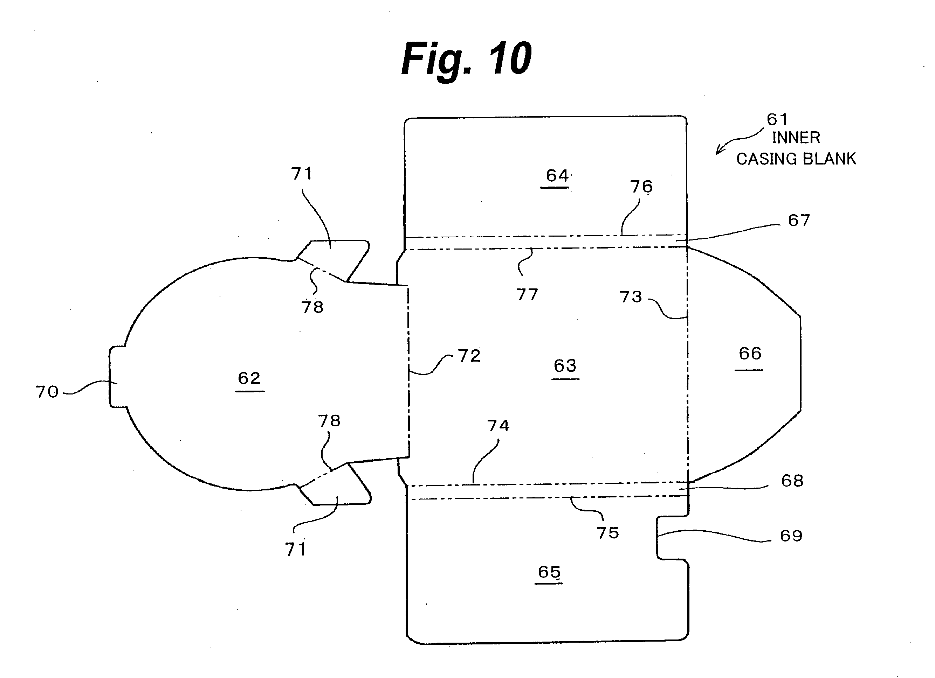

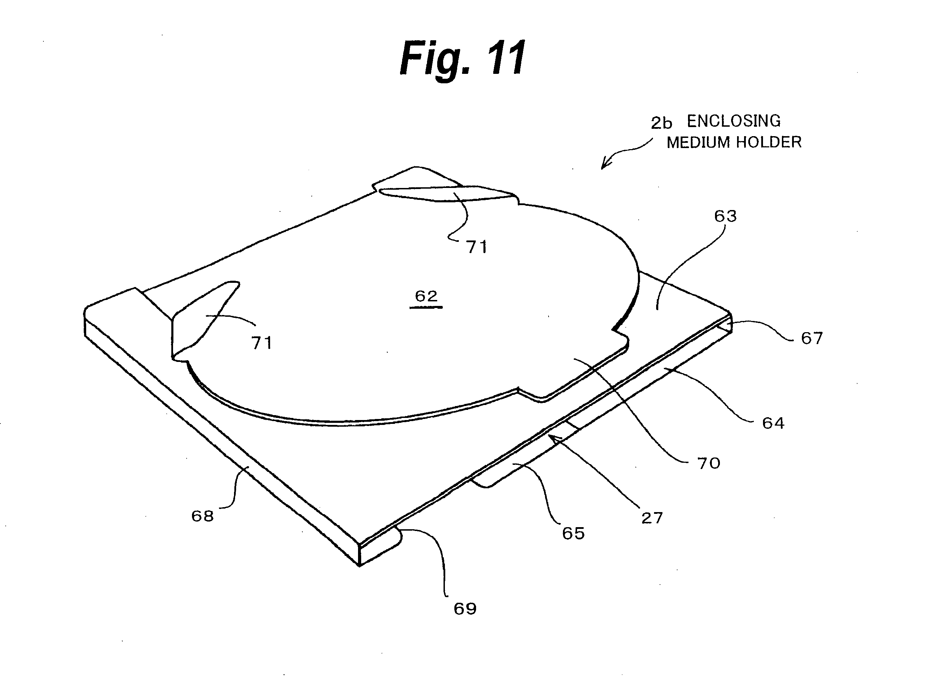

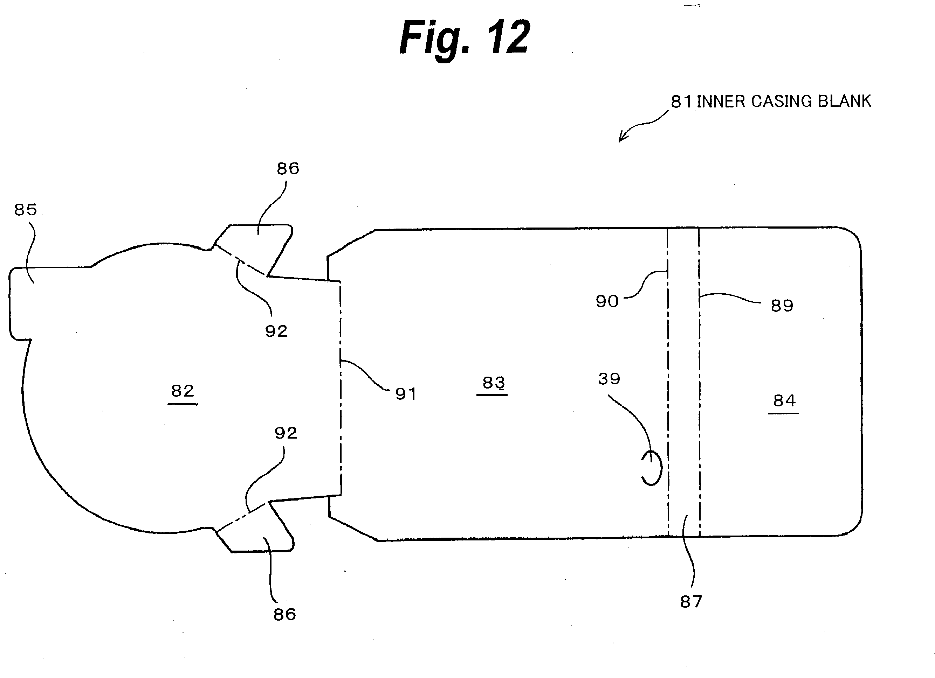

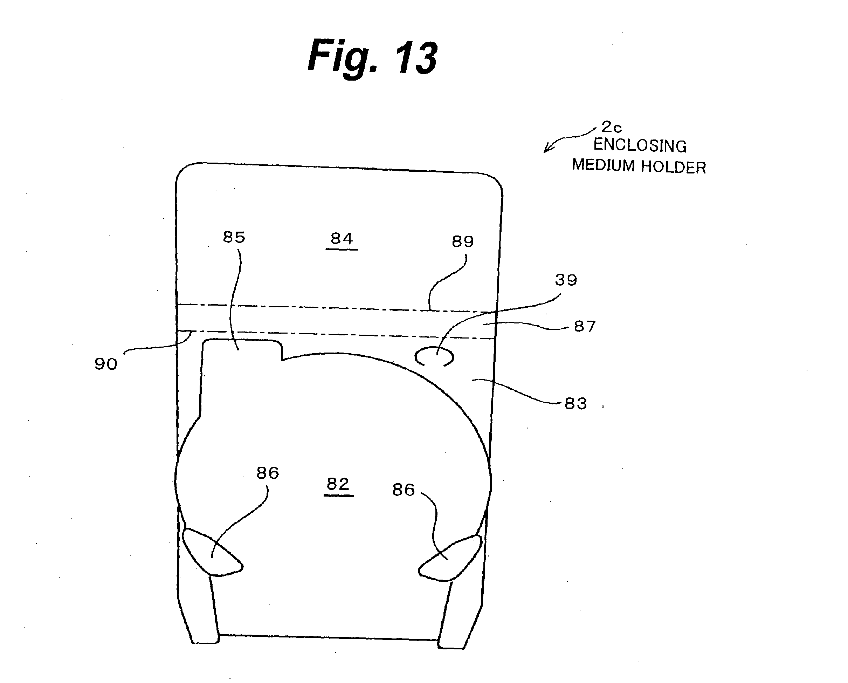

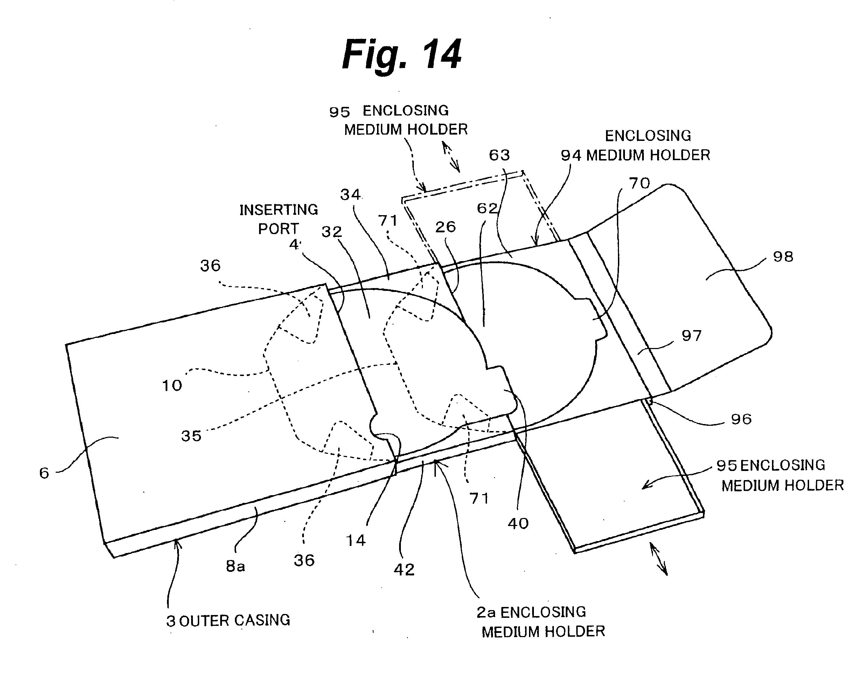

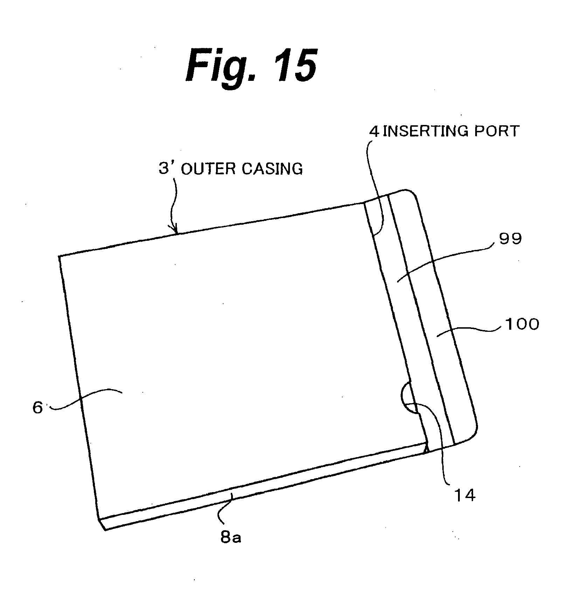

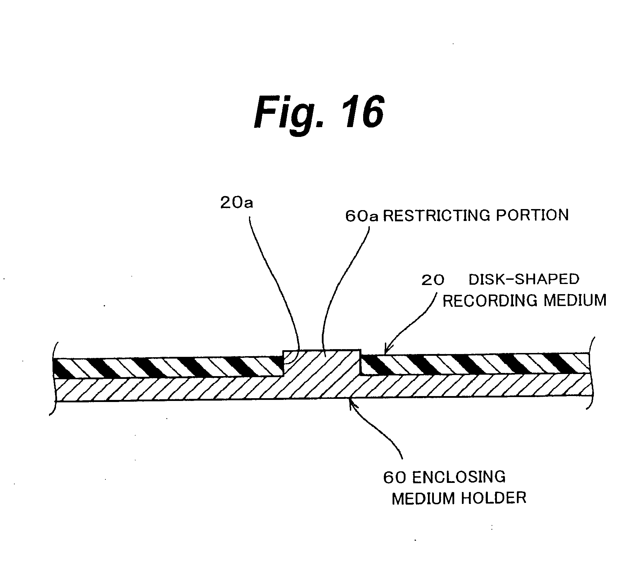

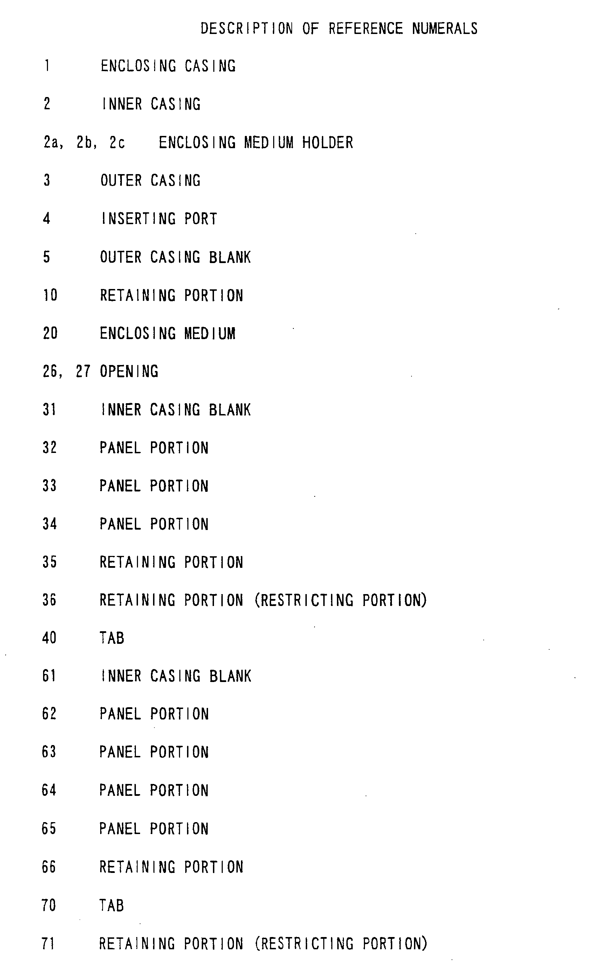

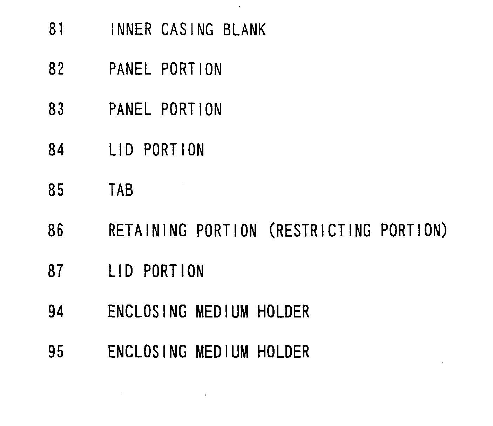

Fig. 1 is a perspective view of the state where enclosing medium holding regions of all enclosing medium holders are exposed to the outside in an enclosing casing according to an embodiment of the invention. Fig. 2 is a perspective view of the state where only the enclosing medium holding region of the enclosing medium holder at the top stage is exposed to the outside in the enclosing casing. Fig. 3 is a plan view of the state where all of the enclosing medium holders have been enclosed in an outer casing in the enclosing casing. Fig. 4 is a plan view of the side opposite to Fig. 3. Fig. 5 is a plan view of a blank of the outer casing constructing the enclosing casing. Fig. 6 is a perspective view during the assembling of the outer casing blank shown in Fig. 5. Fig. 7 is a plan view of a blank of the enclosing medium holder at the top stage. Fig. 8 is a perspective view during the assembling of the blank shown in Fig. 7. Fig. 9 is a perspective view of the enclosing medium holder at the top stage. Fig. 10 is a plan view of a blank of the enclosing medium holder at the intermediate stage. Fig. 11 is a perspective view of the enclosing medium holder at the intermediate stage. Fig. 12 is a plan view of a blank of the enclosing medium holder at the lowest stage. Fig. 13 is a plan view of the enclosing medium holder at the lowest stage. Fig. 14 is a perspective view showing a modification of the enclosing medium holders. Fig. 15 is a perspective view showing a modification of the outer casing. Fig. 16 is a cross sectional view showing a modification of a restricting portion which is provided for the enclosing medium holder.

### Best Mode for Carrying Out the Invention

An embodiment of the invention will be described hereinbelow with reference to the drawings. In the following embodiment, a disk-shaped recording medium is mentioned as an example of enclosing media and explanation will be made. Fig. 3 shows an external plan view of an enclosing casing 1 according to the embodiment of the invention. Fig. 4 shows a back side diagram of Fig. 3. Fig. 1 is a perspective view showing the state where enclosing medium holders 2a, 2b, and 2c have been pulled out of an outer casing 3 in the enclosing casing 1. An inner casing 2 is constructed by the enclosing medium holders 2a, 2b, and 2c of a plurality of stages. Fig. 2 shows the state where the enclosing medium holders 2b and 2c have been overlaid to the enclosing medium holder 2a and only an enclosing medium holding region of the enclosing medium holder 2a is exposed to the outside of the outer casing 3. Each of the enclosing medium holders 2a, 2b, and 2c and the outer casing 3 is obtained by a method whereby a blank made of a paper material which has been punched into a predetermined shape is folded, a necessary portion is adhered, an inserting member is come into engagement with a slit, or the like. First, the outer casing 3 will be described. The outer casing 3 is assembled by a blank 5 (hereinafter, also referred to as an outer casing blank) which is obtained by punching the paper material into a shape shown in Fig. 5. The outer casing blank 5 is mainly constructed by: an upper panel portion 6; a bottom panel portion 7; two side panel portions 8a and 8b; a rear panel portion 9; and a retaining portion 10. Each of the upper panel portion 6, bottom panel portion 7, side panel portions 8a and 8b, and rear panel portion 9 has a rectangular shape. The retaining portion 10 has an almost trapezoidal shape.

The two side panel portions 8a and 8b are connected to two sides (of the upper panel portion 6) which face in parallel, respectively. The rear panel portion 9 is connected to one of the remaining two sides of the upper panel portion 6. Further, the bottom panel portion 7 is connected to the rear panel portion 9. In the upper panel portion 6, the retaining portion 10 is connected to the side which faces the rear panel portion 9. Folding flaps 11a and 11b and overlap widths 12a and 12b are connected to the side panel portions 8a and 8b, respectively. The folding flaps 11a and 11b are overlaid to the rear panel portion 9 when the outer casing blank 5 is assembled. The overlap widths 12a and 12b are adhered to the bottom panel portion 7 when the outer casing blank 5 is assembled. In the diagram, an alternate long and short dash line indicates a ruled line which is valley-folded and the outer casing blank 5 is valley-folded along each ruled line as shown in Fig. 6. The ruled line denotes a groove which is formed by, for example, pressing a pressing blade made of wood, metal, or the like to the paper material in order to enable the paper material to be easily folded. Although not shown in the outer casing blank 5, an alternate long and two short dashes line indicates a ruled line which is mountain-folded. In the following explanation, a distinction between the kinds of those lines is used in common. A notch 13 is formed at an edge of the bottom panel portion 7. A circular hole 14 is formed at a boundary between the upper panel portion 6 and the retaining portion 10. When the outer casing blank 5 is assembled, the notch 13 and the circular hole 14 face each other and function as a finger hook portion to pull out the enclosing medium holders 2a to 2c from the outer casing 3. The reason why a notch 15 is formed in the overlap width 12a is to prevent a part of the overlap width 12a from being located in the notch 13 formed in the bottom panel portion 7 when the overlap width 12a is adhered to the bottom panel portion 7. Each ruled line of the outer casing blank 5 is folded as shown in Fig. 6, the overlap widths 12a and 12b are further adhered to the bottom panel portion 7, and the folding flaps 11a and 11b are overlaid to the rear panel portion 9, so that the outer casing 3 formed by a flat box in which an elongated inserting port 4 is formed in one side portion is obtained (refer to Figs. 3 and 4). Upon assembling, a necessary portion can be fixed by, for example, allowing the inserting member to be come into engagement with the slit, or the like without limiting to the adhesion. The retaining portion 10 is merely folded back to the upper panel portion 6 side along the ruled line at the boundary with the upper panel portion 6 and is not adhered to the upper panel portion 6. The enclosing medium holder 2a will now be described. The enclosing medium holder 2a is assembled from a blank 31 (hereinbelow, also referred to as an inner casing blank) which is obtained by punching the paper material into a shape shown in Fig. 7. The inner casing blank 31 is mainly constructed by: first to third panel portions 32, 33, and 34; and a retaining portion 35. The first panel portion 32 is constructed by a combination of a portion having an arc-shaped outer edge and a portion having a rectilinear outer edge. The portion having the arc-shaped outer edge functions as an enclosing medium holding region and its area is almost equal to or slightly larger than that of, for example, the disk-shaped recording medium having a diameter of 120 mm. A tab 40 is formed in a part of the arc-shaped outer edge so as to be projected to the outside of the enclosing medium holding region. A retaining portion 36 having an almost trapezoidal shape is formed between the arc-shaped outer edge and the rectilinear outer edge. The retaining portions 36 are formed at two positions having such a relation that they are line-symmetrical with respect to a line which divides a region between two rectilinear outer edges which face each other into halves. A ruled line 56 is formed at a boundary between each retaining portion 36 and the first panel portion 32. The ruled line 56 is inclined so as to be directed toward the outside from the rectilinear outer edge and connects the rectilinear outer edge and the arc-shaped outer edge. The first panel portion 32 is connected to the second panel portion 33 through a band plate portion 41. A ruled line 48 is formed at a boundary between the first panel portion 32 and the band plate portion 41. A ruled line 49 is formed at a boundary between the band plate portion 41 and the second panel portion 33. A slit 46 is formed in a center portion of the ruled line 48. A trapezoidal inserting member 41a separated from the first panel portion 32 by the slit 46 is formed in the band plate portion 41 so as to be projected toward the first panel portion 32 side. The second panel portion 33 has an almost rectangular shape having an area larger than that of the first panel portion 32. In the second panel portion 33, a notch 37 having an almost rectangular shape is formed at an edge on the side opposite to the side where the first panel portion 32 has been connected. The second panel portion 33 is connected to the third panel portion 34 through a band plate portion 42. A ruled line 50 is formed at a boundary between the second panel portion 33 and the band plate portion 42. A ruled line 51 is formed at a boundary between the band plate portion 42 and the third panel portion 34. The third panel portion 34 has an almost rectangular shape having almost the same area as that of the second panel portion 33. In the third panel portion 34, an overlap width 45 is connected through a band plate portion 44 to an edge on the side opposite to the side where the second panel portion 33 has been connected. A ruled line 52 is formed at a boundary between the third panel portion 34 and the band plate portion 44. A ruled line 53 is formed at a boundary between the band plate portion 44 and the overlap width 45. A band plate portion 43 is connected through a ruled line 54 to an edge of the third panel portion 34 formed with the ruled line 54 existing on the same straight line as that of the ruled line 49 formed in the second panel portion 33. A slit 47 is formed in a center portion of the ruled line 54. A trapezoidal inserting member 43a separated from the third panel portion 34 by the slit 47 is formed in the band plate portion 43 so as to be projected toward the third panel portion 34 side. In the third panel portion 34, the almost trapezoidal retaining portion 35 is connected to an edge on the side opposite to the side where the band plate portion 43 has been connected. A ruled line 55 is formed at a boundary between the third panel portion 34 and the retaining portion 35. The enclosing medium holder 2a is assembled from the inner casing blank 31 as follows. From the developing state of Fig. 7, the retaining portion 35 is folded toward the third panel portion 34 side along the ruled line 55 and the inner surface (shown in the diagram) of the retaining portion 35 faces and the inner surface (shown in the diagram) of the third panel portion 34. The retaining portion 35 is not adhered to the inner surface of the third panel portion 34. The band plate portion 43 is folded along the ruled line 54 on the inner surface side of the third panel portion 34 so as to stand. The band plate portion 44 is also folded along the ruled line 52 on the inner surface side of the third panel portion 34 so as to stand. Further, the overlap width 45 connected to the band plate portion 44 is folded along the ruled line 53 so as to face the inner surface side of the third panel portion 34. From the above state, the band plate portion 42 is folded along the ruled line 50 on the inner surface side of the second panel portion 33 so as to stand. Further, the third panel portion 34 is folded along the ruled line 51 so that its inner surface faces the inner surface of the second panel portion 33 (shown in the diagram). The above-mentioned state is shown in Fig. 8. The overlap width 45 is adhered to the inner surface of the second panel portion 33 or a necessary portion can be also fixed by, for example, allowing the inserting member to be come into engagement with the slit, or the like without limiting to the adhesion. The retaining portions 36 are folded along the ruled lines 56 to the side opposite to the first panel portion 32 shown in Fig. 8. The band plate portion 41 is folded along the ruled line 49 so as to be overlaid to the band plate portion 43. Further, the first panel portion 32 is folded along the ruled line 48 so that its inner surface (surface shown in Fig. 8) is overlaid to the outer surface (surface shown in Fig. 8) of the third panel portion 34. When the first panel portion 32 is overlaid to the third panel portion 34, the inserting member 43a projected to this side of the paper surface in Fig. 8 is inserted into the slit 46. Thus, a front edge portion of the inserting member 43a is projected from the outer surface of the first panel portion 32 as shown in Fig. 9 through the side of a slit 46. Since the first panel portion 32 is come into engagement with the inserting member 43a, the floating of the first panel portion 32 from the third panel portion 34 is suppressed, thereby stably holding the state where they have been overlaid. The first panel portion 32 and the third panel portion 34 are not mutually adhered. In this manner, as shown in Fig. 9, the enclosing medium holder 2a formed by the flat box in which an elongated opening 26 is formed in one side edge portion is obtained. Both of the band plate portions 42 and 44 function as left and right side walls of the enclosing medium holder 2a. The overlapped band plate portions 41 and 43 function as a bottom wall of the enclosing medium holder 2a. The tab 40 is projected toward the outer side of the enclosing medium holder 2a more than the opening 26. The enclosing medium holder2bwillnowbedescribed. Theenclosingmediumholder 2b is assembled from a blank 61 (hereinbelow, also referred to as an inner casing blank) which is obtained by punching the paper material into a shape shown in Fig. 10. The inner casing blank 61 is mainly constructed by first to fourth panel portions 62, 63, 64, and 65 and a retaining portion 66. The first panel portion 62 is constructed by a combination of a portion having an arc-shaped outer edge and a portion having a rectilinear outer edge. The portion having the arc-shaped outer edge functions as an enclosing medium holding region and its area is almost equal to or slightly larger than that of, for example, the disk- shaped recording medium having a diameter of 120 mm. A tab 70 is formed in a part of the arc-shaped outer edge so as to be projected to the outside of the enclosing medium holding region. A retaining portion 71 having an almost trapezoidal shape is formed between the arc-shaped outer edge and the rectilinear outer edge so as to be projected to the outside of the enclosing medium holding region. The retaining portions 71 are formed at two positions having such a relation that they are line-symmetrical with respect to a line which divides a region between two rectilinear outer edges which face each other into halves. A ruled line 78 is formed at a boundary between each retaining portion 71 and the first panel portion 62. The ruled line 78 is inclined so as to be directed toward the outside from the rectilinear outer edge and connects the rectilinear outer edge and the arc-shaped outer edge. The first panel portion 62 is connected to the second panel portion 63 through a ruled line 72. The ruled line 72 is formed at the position which is slightly inside from an edge of the second panel portion 63. When the first panel portion 62 is folded along the ruled line 72 and overlaid to the second panel portion 63, as shown in Fig. 11, a concave dent is formed at the edge of the second panel portion 63. The second panel portion 63 has an almost rectangular shape having an area larger than that of the first panel portion 62. In the second panel portion 63, the retaining portion 66 having an almost trapezoidal shape is connected to an edge on the side opposite to the side where the first panel portion 62 is connected. A ruled line 73 is formed at a boundary between the second panel portion 63 and the retaining portion 66. The second panel portion 63 is connected to the third panel portion 64 and the fourth panel portion 65 through band plate portions 67 and 68, respectively. A ruled line 77 is formed at a boundary between the second panel portion 63 and the band plate portion 67. A ruled line 76 is formed at a boundary between the band plate portion 67 and the third panel portion 64. A ruled line 74 is formed at a boundary between the second panel portion 63 and the band plate portion 68. A ruled line 75 is formed at a boundary between the band plate portion 68 and the fourth panel portion 65. Each of the third panel portion 64 and the fourth panel portion 65 has an almost rectangular shape having an area smaller than that of the second panel portion 63. A notch 69 having an almost rectangular shape is formed at an edge of the fourth panel portion 65 existing on the same straight line as that of the ruled line 73 of the second panel portion 63. The enclosing medium holder 2b is assembled from the inner casing blank 61 as follows. From a developing state of Fig. 10, the retaining portion 66 is folded toward the inner surface (surface opposite to the surface shown in the diagram) side of the second panel portion 63 along the ruled line 73. The inner surface (surface opposite to the surface shown in the diagram) of the retaining portion 66 is made to face the inner surface of the second panel portion 63. The retaining portion 66 is not adhered to the inner surface of the second panel portion 63. The band plate portion 67 is folded along the ruled line 77 on the inner surface side (back side of the paper surface) of the second panel portion 63 so as to stand. Further, the third panel portion 64 connected to the band plate portion 67 is folded along the ruled line 76 so as to face the inner surface of the second panel portion 63. The band plate portion 68 is folded along the ruled line 74 on the inner surface side (back side of the paper surface) of the second panel portion 63 so as to stand. Further, the fourth panel portion 65 connected to the band plate portion 68 is folded along the ruled line 75 so as to face the inner surface of the second panel portion 63. The third and fourth panel portions 64 and 65 are mutually adhered or they can be also fixed by, for example, allowing the inserting member to be come into engagement with the slit, or the like without limiting to the adhesion. The retaining portion 71 is folded back to the side opposite to the side of the first panel portion 62 shown in Fig. 10 along the ruled line 78. The first panel portion 62 is folded along the ruled line 72 so that its inner surface (surface shown in Fig. 10) is overlaid to the outer surface (surface shown in Fig. 10) of the second panel portion 63. The ruled line 72 at the boundary between the first panel portion 62 and the second panel portion 63 is formed at the position which is slightly inside from the edge of the second panel portion 63. When the first panel portion 62 is folded along the ruled line 72 and overlaid to the second panel portion 63, the concave dent is formed at the edge of the second panel portion 63 as shown in Fig. 11. By deviating the ruled line 72 from the edge of the second panel portion 63 as mentioned above, a length of folding portion which is formed along the ruled line 72 can be made shorter than that in the case where the ruled line 72 is made to coincide with the edge of the second panel portion 63. Thus, the floating of the first panel portion 62 from the second panel portion 63 due to a repulsion that is caused in the folding portion is suppressed, thereby stably holding the state where they have been overlaid. The first panel portion 62 and the second panel portion 63 are not mutually adhered. As mentioned above, as shown in Fig. 11, the enclosing medium holder 2b formed by a flat box in which an elongated opening 27 is formed in one side edge portion is obtained. Both of the band plate portions 67 and 68 function as right and left side walls of the enclosing medium holder 2b. In the enclosing medium holder 2b, a side edge portion which faces the side edge portion where the opening 27 has been formed is also opened. The tab 70 is projected toward the outer side of the enclosing medium holder 2b more than the opening 27. The enclosing medium holder 2c will now be described. The enclosing medium holder 2c is assembled from a blank 81 (hereinbelow, also referred to as an inner casing blank) which is obtained by punching the paper material into a shape shown in Fig. 12. The inner casing blank 81 is mainly constructed by first and second panel portions 82 and 83 and lid portions 87 and 84. The first panel portion 82 is constructed by a combination of a portion having an arc-shaped outer edge and a portion having a rectilinear outer edge. The portion having the arc-shaped outer edge functions as an enclosing medium holding region and its area is almost equal to or slightly larger than that of, for example, the disk-shaped recording medium having the diameter of 120 mm. A tab 85 is formed in a part of the arc-shaped outer edge so as to be projected to the outside of the enclosing medium holding region. A retaining portion 86 having an almost trapezoidal shape is formed between the arc-shaped outer edge and the rectilinear outer edge so as to be projected to the outside of the enclosing mediumholding region. The retaining portions 86 are formed at two positions having such a relation that they are line-symmetrical with respect to a line which divides a region between two rectilinear outer edges which face each other into halves. A ruled line 92 is formed at a boundary between each retaining portion 86 and the first panel portion 82. The ruled line 92 is inclined so as to be directed toward the outside from the rectilinear outer edge and connects the rectilinear outer edge and the arc-shaped outer edge. The first panel portion 82 is connected to the second panel portion 83 through a ruled line 91. The ruled line 91 is formed at the position which is slightly inside from an edge of the second panel portion 83. When the first panel portion 82 is folded along the ruled line 91 and overlaid to the second panel portion 83, as shown in Fig. 13, the concave dent is formed at the edge of the second panel portion 83. The second panel portion 83 has an almost rectangular shape having an area larger than that of the first panel portion 82. In the second panel portion 83, the lid portion 84 is connected through the lid portion 87 having a band plate shape to an edge on the side opposite to the side where the first panel portion 82 is connected. The lid portion 84 has an almost rectangular shape having an area smaller than that of the second panel portion 83. A ruled line 90 is formed at a boundary between the second panel portion 83 and the lid portion 87. A ruled line 89 is formed at a boundary between the lid portion 87 and the lid portion 84. In the second panel portion 83, a finger hook member 39 is formed at a position near the lid portion 87. By an elliptical notch, the finger hook member 39 is connected to the second panel portion 83 only in a part of the finger hook member 39. The enclosing medium holder 2c is assembled from the inner casing blank 81 as follows. From a developing state of Fig. 12, the retaining portion 86 is folded toward the side opposite to the side of the first panel portion 82 shown in Fig. 12 along the ruled line 92. The first panel portion 82 is folded along the ruled line 91 so that its inner surface (surface shown in Fig. 12) is overlaid to the inner surface (surface shown in Fig. 12) of the second panel portion 83. The ruled line 91 at the boundary between the first panel portion 82 and the second panel portion 83 is formed at the position which is slightly inside from the edge of the second panel portion 83. When the first panel portion 82 is folded along the ruled line 91 and overlaid to the second panel portion 83, the concave dent is formed at the edge of the second panel portion 83 as shown in Fig. 13. By deviating the ruled line 91 from the edge of the second panel portion 83 as mentioned above, a length of folding portion which is formed along the ruled line 91 can be made shorter than that in the case where the ruled line 91 is made to coincide with the edge of the second panel portion 83. Thus, the floating of the first panel portion 82 from the second panel portion 83 due to a repulsion that is caused in the folding portion is suppressed, thereby stably holding the state where they have been overlaid. The first panel portion 82 and the second panel portion 83 are not mutually adhered. As mentioned above, the enclosing medium holder 2c shown in Fig. 13 is obtained. The tab 85 is positioned on the inner surface of the second panel portion 83 so as not to reach the ruled line 90. The enclosing medium holders 2a to 2c constructed as mentioned above are mutually combined in a telescopic form as follows. The enclosing medium holder 2b is inserted into the enclosing medium holder 2a through the opening 26 and both of the enclosing medium holders 2a and 2b are overlaid each other. The enclosing medium holder 2b is movable in such a direction as to be inserted and ejected into/from the enclosing medium holder 2a through the opening 26. In the enclosing medium holder 2a, to the inner surface of the third panel portion 34 as an opposite portion to the first panel portion 62 of the enclosing medium holder 2b, the retaining portion 35 is folded toward the inside of the enclosing medium holder 2a. In the enclosing medium holder 2b, the retaining portion 71 is formed in the first panel portion 62 as an opposite portion to the third panel portion 34 of the enclosing medium holder 2a so as to be folded back in the direction opposite to that of the retaining portion 35. When the enclosing medium holder 2b is moved in such a direction as to be pulled out of the enclosing medium holder 2a, as shown by broken lines in Fig. 1, the retaining portions 35 and 71 are come into engagement with each other so as to be mutually hooked. The band plate portions 68 and 67 of the enclosing medium holder 2b are made to face the band plate portions 42 and 44 of the enclosing medium holder 2a, respectively. The third and fourth panel portions 64 and 65 of the enclosing medium holder 2b are made to face the second panel portion 33 of the enclosing medium holder 2a.

The projecting direction of the tab 70 of the enclosing medium holder 2b coincides with that of the tab 40 of the enclosing medium holder 2a. That is, the tab 70 is projected in such a direction that the enclosing medium holder 2b is pulled out of the enclosing medium holder 2a. The enclosing medium holder 2c is inserted into the enclosing medium holder 2b through the opening 27 and both of the enclosing medium holders 2b and 2c are overlaid. The enclosing medium holder 2c is movable in such a direction as to be inserted and ejected into/from the enclosing medium holder 2b through the opening 27. In the enclosing medium holder 2b , to the inner surface of the second panel portion 63 as an opposite portion to the first panel portion 82 of the enclosing medium holder 2c, the retaining portion 66 is folded toward the inside of the enclosing medium holder 2b. In the enclosing medium holder 2c, the retaining portion 86 is formed in the first panel portion 82 as an opposite portion to the second panel portion 63 of the enclosing medium holder 2b so as to be folded back in the direction opposite to that of the retaining portion 66. When the enclosing medium holder 2c is moved in such a direction as to be pulled out of the enclosing medium holder 2b, as shown by the broken lines in Fig. 1, the retaining portions 66 and 86 are come into engagement with each other so as to be mutually hooked. The second panel portion 83 of the enclosing medium holder 2c is made to face the third and fourth panel portions 64 and 65 of the enclosing medium holder 2b, respectively. The projecting direction of the tab 85 of the enclosing medium holder 2c coincides with that of the tab 70 of the enclosing medium holder 2b. That is, the tab 85 is projected in such a direction that the enclosing medium holder 2c is pulled out of the enclosing medium holder 2b. The enclosing medium holders 2a to 2c are inserted into the outer casing 3 through the inserting port 4. It is the outermost enclosing medium holder 2a that is come into contact with the outer casing 3 and directly slid therefrom. The enclosing medium holder 2b is enclosed in the enclosing medium holder 2a so as to be slidable thereto. The enclosing medium holder 2c is enclosed in the enclosing medium holder 2b so as to be slidable thereto. Consequently, all of the enclosing medium holders 2a to 2c are movable in such a direction as to be inserted and ejected into/from the outer casing 3 through the inserting port 4. In the outer casing 3, the retaining portion 10 is formed in the inner surface of the upper panel portion 6 as an opposite portion to the first panel portion 32 of the enclosing medium holder 2a so as to be folded back in the inserting direction of the enclosing medium holder 2a. In the enclosing medium holder 2a, the retaining portion 36 is formed in the first panel portion 32 as an opposite portion to the upper panel portion 6 of the outer casing 3 so as to be folded back in the pulling direction of the enclosing medium holder 2a opposite to that of the retaining portion 10. When the enclosing medium holder 2a is moved in such a direction as to be pulled out of the outer casing 3, as shown by the broken lines in Fig. 1, the retaining portions 10 and 36 are come into engagement with each other so as to be mutually hooked. The band plate portions 42 and 44 of the enclosing medium holder 2a are made to face the side panel portions 8a and 8b of the outer casing 3, respectively. The second panel portion 33 of the enclosing medium holder 2a is made to face the bottom panel portion 7 of the outer casing 3. The tab 40 of the enclosing medium holder 2a is projected in such a direction that the enclosing medium holder 2a is pulled out of the outer casing 3. The holding of the enclosing media in the enclosing medium holders will now be described. The enclosing media are held in the first panel portions 32, 62, and 82 of the enclosing medium holders 2a to 2c, respectively. For example, Fig. 2 shows the state where a disk-shaped recording medium 20 (shown by an alternate long and short dash line) as an enclosing medium has been held in the first panel portion 32 of the enclosing medium holder 2a. For example, a recording surface of the enclosing medium holder 2a is in contact with the first panel portion 32 and a print surface (label surface) is set to a front side. Further, a part of an arc-shaped outer edge of the disk-shaped recording medium 20 is in contact with the valley-folding portion formed by folding back the retaining portions 36. The valley-folding portion is inclined so as to restrict the movement of the disk-shaped recording medium 20 to the rear panel portion 9 of the outer casing 3 and the movement to the side panel portions 8a and 8b. Thus, in the disk-shaped recording medium 20, the motion of in the directions other then the direction in which it is pulled out of the outer casing 3 is restricted and the motion in the direction in which it is floated up from the first panel portion 32 is also restricted by the retaining portions 36, so that the medium 20 is stably held on the first panel portion 32. Thus, the rub between the recording surface of the disk-shaped recording medium 20 and the first panel portion 32 is suppressed, thereby preventing the recording surface from being scratched. Therefore, the retaining portion 36 functions as a restricting portion to restrict the positional deviation of the disk-shaped recording medium 20 on the first panel portion 32. This is also true of the first panel portions 62 and 82 of the other enclosing medium holders 2b and 2c. The enclosing media respectively held on the first panel portions 32, 62, and 82 of the enclosing medium holders 2a, 2b, and 2c are held without being come into contact with each other. The contact with the other enclosing media can be avoided. It is also possible to prevent that the enclosing media are scratched due to the rub of the mutual enclosing media. By adjusting widths of rules lines 56, 78, and 92 formed at the boundaries between the first panel portions 32, 62, and 82 of the enclosing medium holders 2a, 2b, and 2c and the retaining portions 36, 71, and 86 or by forming two rules lines in parallel and adjusting an interval between them, the pressing force which acts on the enclosing media from the valley-folding portion or the retaining portions 36, 71, and 86 can be adjusted or the holding force can be adjusted to a desired holding force in consideration of ease of inserting, pulling, or the like of the enclosing media into/from the first panel portions 32, 62, and 82. By partially cutting the ruled lines along the extending direction (for example, a continuous slit is formed in a part of the ruled line or the whole ruled line is formed as a perforation constructed by a repetition of broken lines and continuous line portions), the repulsion of the valley-folding portion can be suppressed and the pressing force to the enclosing media can be reduced. The outer casing 3 is formed by the flat box having an inner volume in which all of the enclosing medium holders 2a to 2c can be enclosed even in the state where the enclosing media have been enclosed in all of the enclosing medium holders 2a to 2c. A gap can be assured between the first panel portion 32 of the enclosing medium holder 2a enclosed in the outer casing 3 and the inner surface of the upper panel portion 6 of the outer casing 3 which the first panel portion 32 faces. Thus, it is prevented that the enclosing medium held on the first panel portion 32 rubs the upper panel portion 6 of the outer casing 3 due to the movement of the enclosing medium holder 2a to the outer casing 3, and the damage of the enclosing medium can be prevented. Similarly, the enclosing medium holder 2a is formed by a flat box and a gap larger than the thickness of disk-shaped recording medium 20 is assured between the first panel portion 62 of the inside enclosing medium holder 2b which is inserted into the enclosing medium holder 2a and the inner surface of the third panel portion 34 of the outside enclosing medium holder 2a which the first panel portion 6 2 faces. Thus, it is prevented that the disk-shaped recording medium 20 held on the first panel portion 62 rubs the third panel portion 34 of the enclosing medium holder 2a due to the slide motion of the enclosing medium holder 2b to the enclosing medium holder 2a, and the damage of the enclosing medium can be prevented. No pressing force acts from the enclosing medium holder 2a on the disk-shaped recording medium 20 held in the enclosing medium holder 2b. Similarly, the enclosing medium holder 2b is formed in a flat box shape. A gap larger than the thickness of disk-shaped recording medium 20 is assured between the first panel portion 82 of the inside enclosing medium holder 2c which is inserted into the enclosing medium holder 2b and the inner surface of the second panel portion 63 of the outside enclosing medium holder 2b which the first panel portion 82 faces. Thus, it is prevented that the disk-shaped recording medium 20 held on the first panel portion 82 rubs the second panel portion 63 of the enclosing medium holder 2b due to the movement of the enclosing medium holder 2c to the enclosing medium holder 2b, and the damage of the enclosing medium can be prevented. No pressing force acts from the enclosing medium holder 2b on the disk-shaped recording medium 20 held in the enclosing medium holder 2c. In the enclosing medium holder 2a, a region between the first panel portion 32 and the third panel portion 34 to which the first panel portion 32 has been overlaid can be also used as an enclosing medium holding region. For example, a pamphlet such as explanation, lyrics card, or the like of the disk-shaped recording medium held on the first panel portion 32 can be sandwiched and held between the first panel portion 32 and the third panel portion 34. In this case, a valley-folding portion between the first panel portion 32 and the third panel portion 34 functions as a bottom portion to prevent a drop-out of the pamphlet. Similarly, in the enclosing medium holder 2b, a region between the first panel portion 62 and the second panel portion 63 to which the first panel portion 62 has been overlaid can be also used as an enclosing medium holding region. For example, a pamphlet such as explanation, lyrics card, or the like of the disk- shaped recording medium held on the first panel portion 62 can be sandwiched and held between the first panel portion 62 and the second panel portion 63. In this case, a valley-folding portion between the first panel portion 62 and the second panel portion 63 functions as a bottom portion to prevent a drop-out of the pamphlet. In the enclosing medium holder 2c, a region between the first panel portion 82 and the second panel portion 83 to which the first panel portion 82 has been overlaid can be also used as an enclosing medium holding region. For example, a pamphlet such as explanation, lyrics card, or the like of the disk-shaped recording medium held on the first panel portion 82 can be sandwiched and held between the first panel portion 82 and the second panel portion 83. In this case, a valley-folding portion between the first panel portion 82 and the second panel portion 83 functions as a bottom portion to prevent a drop-out of the pamphlet. If the enclosing medium holder 2a is enclosed in the outer casing 3 in the state of Fig. 2 where the enclosing medium holder 2c has been enclosed in the enclosing medium holder 2b and the enclosing medium holder 2b has been enclosed in the enclosing medium holder 2a, all of the enclosing medium holders 2a to 2c are enclosed in the outer casing 3 together with the held enclosing media. In this state, if the lid portions 87 and 84 formed in the enclosing medium holder 2c of the lowest stage are folded along the ruled lines 90 and 89 so as to wrap the openings of the enclosing medium holders 2a and 2b on the upper stage side and the front edge portion of the lid portion 84 is inserted into the gap between the upper panel portion 6 of the outer casing 3 and the first panel portion 32 of the enclosing medium holder 2a, the inserting port 4 of the outer casing 3 can be closed by the lid portion 87. Thus, the fly-out of the enclosing medium from the inserting port 4 and the entering of the dust or moisture from the inserting port 4 into the outer casing 3 can be prevented. The pull-out of the enclosing medium holders from the outer casing will now be described. To pull out the enclosing medium holders 2a to 2c from the outer casing 3, the finger hook member 39 (refer to Fig. 4) which has been formed in the second panel portion 83 of the enclosing medium holder 2c and exposed to the outside from the notch 13 of the outer casing 3 is slightly depressed, for example, a forefinger is hooked to the finger hook member 39, for example, a thumb is hooked to the lid portion 84 exposed from the hole 14 (refer to Fig. 3) formed in the outer casing 3, and the enclosing medium holders 2a to 2c are grasped and pulled out of the outer casing 3. To expose the finger hook member 39 to the outside, the notches 69 and 37 are formed in the fourth panel portion 65 of the enclosing medium holder 2b which is overlaid to the second panel portion 83 of the enclosing medium holder 2c and the second panel portion 33 of the enclosing medium holder 2a, respectively. Since the finger hook member 39 is not formed as an opening which has completely been hollowed but is formed as a member which can be depressed into the casing, the entering of the dirt or dust into the casing can be prevented. In the enclosing medium holders 2a to 2c pulled out of the outer casing 3, since the enclosing medium holder 2b is slidable to the enclosing medium holder 2a and the enclosing medium holder 2c is slidable to the enclosing medium holder 2b, by pulling out the enclosing medium holder 2b from the enclosing medium holder 2a and, further, pulling out the enclosing medium holder 2c from the enclosing medium holder 2b, as shown in Fig. 1, the first panel portions 32, 62, and 82 of the enclosing medium holders 2a to 2c can be exposed to the outside in a lump. Thus, each of the enclosing media held in the first panel portions 32, 62, and 82 can be distinguished from the others and recognized. The requested enclosing medium can be selected and extracted without confusing with the other media. Since all of the pulling direction of the enclosing medium holders 2a to 2c from the outer casing 3, the pulling direction of the enclosing medium holder 2b from the enclosing medium holder 2a, and the pulling direction of the enclosing medium holder 2c from the enclosing medium holder 2b are the same direction, the user can expose each of the first panel portions 32, 62, and 82 to the outside by the one rectilinear pulling operation. Thus, the user can promptly expose all of the first panel portions 32, 62, and 82 to the outside without confusing about the pulling directions. By using such a construction that the enclosing medium holders 2a to 2c are reciprocatively moved in almost the same direction as mentioned above, the enclosing medium holding regions of the enclosing medium holders 2a to 2c can be individually exposed to the outside of the outer casing 3. For example, Fig. 2 shows the state where only the enclosing medium holding region of the enclosing medium holder 2a has been exposed to the outside of the outer casing 3. Naturally, only the enclosing medium holding region of the enclosing medium holder 2b or only the enclosing medium holding region of the enclosing medium holder 2c can be also individually exposed to the outside of the outer casing 3, or only the enclosing medium holder 2a and the enclosing medium holder 2b, only the enclosing medium holder 2a and the enclosing medium holder 2c, or only the enclosing medium holder 2b and the enclosing medium holder 2c can be also exposed to the outside of the outer casing 3. Consequently, the developing space can be decreased more than that in the case where all of the enclosing medium holders 2a to 2c are pulled out of the outer casing 3 and developed. All of the retaining portions 10, 35, and 66 of the outer casing 3 and the enclosing medium holders 2a and 2b are folded back in the direction opposite to the pulling direction. All of the retaining portions 36, 71, and 86 of the enclosing medium holders 2a to 2c are folded back in the pulling direction. Therefore, when the enclosing medium holders 2a to 2c are pulled out, the retaining portion 36 of the enclosing medium holder 2a is hooked to the retaining portion 10 of the outer casing 3, the retaining portion 71 of the enclosing medium holder 2b is hooked to the retaining portion 35 of the enclosing medium holder 2a, and the retaining portion 86 of the enclosing medium holder 2c is hooked to the retaining portion 66 of the enclosing medium holder 2b. Thus, the separation of the outer casing 3 and the enclosing medium holder 2a, the separation of the enclosing medium holder 2a and the enclosing medium holder 2b, and the separation of the enclosing medium holder 2b and the enclosing medium holder 2c are prevented. That is, the outer casing 3 and the enclosing medium holders 2a to 2c can be handled as a product of one piece. The drop-out of each of the outer casing 3 and the enclosing medium holders 2a to 2c can be prevented and the damage or loss of them can be prevented. In the state where the enclosing medium holder 2a has been hooked to the outer casing 3 and its pull-out is restricted, as shown in Fig. 2, most of the enclosing medium holding region is exposed to the outside. For example, if the enclosing medium is the disk-shaped recording medium 20, since its center hole 20a is exposed to the outside, by hooking a finger to the center hole 20a and a part of the arc-shaped outer edge, the user can extract the medium without coming into contact with the recording surface of the disk-shaped recording medium 20. This is also true of the other enclosing medium holders 2b and 2c. For example, in the case where the user grasps the enclosing medium holder 2c with the hand, the hook of the retaining portion 66 of the enclosing medium holder 2b and the retaining portion 86 of the enclosing medium holder 2c provides such an action that the enclosing medium holder 2b is towed by the enclosing medium holder 2c and pulled out of the enclosing medium holder 2a. Similarly, the hook of the retaining portion 35 of the enclosing medium holder 2a and the retaining portion 71 of the enclosing medium holder 2b provides such an action that the enclosing medium holder 2a is towed by the enclosing medium holder 2b and pulled out of the outer casing 3. Each of the foregoing retaining portions is not limited to the folding member but it is sufficient that the retaining portions have such a structure that they can be mutually hooked. For instance, a hook-shaped member may be provided. For the enclosing medium holders 2a to 2c, since the tabs 40, 70, and 85 are provided in the edge portions which face the inserting port 4 in the state where they have been enclosed in the outer casing 3 , the enclosing medium holders 2a to 2c can be also selectively pulled out by using the tabs 40, 70, and 85. The state where only the enclosing medium holding region of the enclosing medium holder 2a has been exposed to the outside is shown in Fig. 2. The enclosing medium holders 2b and 2c are overlaid to the enclosing medium holder 2a and their enclosing medium holding regions are not exposed to the outside. In the state where the enclosing medium holders 2a to 2c have been overlaid and enclosed in the outer casing 3, the positions of the tabs 40, 70, and 85 are deviated with respect to the plane direction so as not to overlap each other and the tabs are projected from the enclosing medium holders 2a to 2c so as to protrude in the pulling direction. Therefore, if information regarding the corresponding enclosing medium has previously been displayed on each of the tabs 40, 70, and 85, the user can selectively pick up only the enclosing medium holder in which the target enclosing medium to be taken out has been held by looking at the display contents of the tab. When the enclosing medium holders 2a to 2c are pulled out, by grasping the tabs 40, 70, and 85 with the fingers, the user can easily and selectively pull out the enclosing medium holders 2a to 2c. The user can pull out the enclosing medium holder 2C of the lowest stage by pinching the lid portion 84 provided for the holder 2C. If the enclosing medium holder 2C of the lowest stage is pulled out, the enclosing medium holder 2b of the intermediate stage is towed by it and can be pulled out. Further, the enclosing medium holder 2a of the top stage is towed by it and can be pulled out. Although the embodiment of the invention has been described above, naturally, the invention is not limited to them but many modifications are possible on the basis of the technical idea of the invention. It is not always necessary to make the directions of the relative movement of the enclosing medium holders coincide but an enclosing medium holder 95 as shown in Fig. 14 may be provided. That is, the enclosing medium holder 2a is movable in such a direction as to be inserted and ejected into/from the outer casing 3. An enclosing medium holder 94 can be freely inserted and ejected into/from the enclosing medium holder 2a in the same direction as the enclosing medium holder 2a. The enclosing medium holder 95 is movable in the direction which perpendicularly crosses the moving direction of the enclosing medium holders 2a and 94. The enclosing medium holder 95 is formed by a flat box and is inserted and ejected into/from the enclosing medium holder 94 through an opening 96 formed in one side portion of the enclosing medium holder 94. As shown by an alternate long and short dash line, the enclosing medium holder 95 can be also inserted and ejected from a side portion on the opposite side. It is not always necessary that the lid portion which closes the inserting port 4 is provided for the enclosing medium holder but lid portions 99 and 100 may be provided for an outer casing 3' as shown in Fig. 15. As a restricting portion to restrict the positional deviation of the enclosing medium on the enclosing medium holder, a restricting portion 60a projected on one surface of an enclosing medium holder 60 may be used as shown in Fig. 16. The restricting portion 60a has a cylindrical shape into which the center hole 20a of the disk-shaped recording medium 20 as an enclosing medium can be fitted. The center hole 20a of the disk-shaped recording medium 20 is fitted to the restricting portion 60a and the medium 20 is fixed to the enclosing medium holder 60 and held, or a tray in a shallow dish shape is used as an enclosing medium holder and the motion in the plane direction of the disk-shaped recording medium can be also restricted by an inner peripheral wall portion of the tray. In each of the enclosing medium holders 2a to 2c, at least a portion with which the enclosing medium is come into contact may be covered with, for example, a nonwoven fabric or may be coated with a material adapted to reduce a contact friction with the other enclosing medium. In the embodiment, the retaining portions 36, 71, and 86 have the two roles in common as a restricting portion to restrict the positional deviation of the enclosing medium and as an engaging portion for the retaining portions 10, 35, and 66. However, it is also possible to allow the retaining portions 36, 71, and 86 to function only as restricting portions and the retaining portions for engagement can be also separately provided. Another enclosing medium such as magnetic card, IC card, pamphlet, thin confectionery like a slab chocolate, or the like can be also held in each enclosing medium holder without limiting to the disk-shaped recording medium. The number of enclosing medium holders is not limited to the number shown in the foregoing embodiment but may be equal to 2, 4, or more.

## Claims

1. An enclosing casing which comprises
a combination of
an outer casing having an inserting port in one side portion and
an inner casing which is inserted and ejected into/from said outer casing through said inserting port,
and in which each of said outer casing and said inner casing is formed by folding a paper material,
wherein said inner casing is constructed by enclosing medium holders of a plurality of stages which overlap each other so as to be relatively movable.

2. An enclosing casing according to claim 1, wherein
all of said enclosing medium holders of said plurality of stages are reciprocatively moved in almost the same direction when they are inserted and ejected into/from said outer casing.

3. An enclosing casing according to claim 1, wherein a restricting portion to restrict a positional deviation of an enclosing medium to said enclosing medium holder is provided for said enclosing medium holder.

4. An enclosing casing according to claim 1, wherein
said outer casing is formed by a box having an internal volume in which all of said enclosing medium holders hold enclosing media and can be enclosed in said outer casing so as to overlap each other.

5. An enclosing casing according to claim 1, wherein
retaining portions which are hooked with each other so as to prevent mutual separation of said enclosing medium holders are provided in portions where said enclosing medium holders overlap each other.

6. An enclosing casing according to claim 1, wherein
retaining portions which are hooked with each other so as to prevent separation of said outer casing and said enclosing medium holder are provided in portions where said outer casing and said enclosing medium holder overlap.

7. An enclosing casing according to claim 1, wherein
a lid portion which closes said inserting port in the state where all of said enclosing medium holders have been enclosed in said outer casing is provided for said enclosing medium holder.

8. An enclosing casing according to claim 7, wherein
said lid portion is provided for the enclosing medium holder of a lowest stage and folded so as to wrap the enclosing medium holders of an upper stage, and its front edge portion is inserted into said inserting port.

9. An enclosing casing according to claim 1, wherein
a lid portion which closes said inserting port in the state where all of said enclosing medium holders have been enclosed in said outer casing is provided for said outer casing.

10. An enclosing casing according to claim 1, wherein
said enclosing medium holders of said plurality of stages overlap in a telescopic form.

11. An enclosing casing according to claim 10, wherein
a gap larger than a thickness of enclosing medium which is held in an inside enclosing medium holder is assured between an outside enclosing medium holder and said inside enclosing medium holder which is inserted into said outside enclosing medium holder.

12. An enclosing casing according to claim 1, wherein
a tab is provided for an edge portion of said enclosing medium holder which faces said inserting port in the state where said enclosing medium holders have been enclosed in said outer casing.
